(19) **Europäisches Patentamt European Patent Office Office européen des brevets**

(11) **EP 4 621 003 A1**

(12) **EUROPEAN PATENT APPLICATION**
published in accordance with Art. 153(4) EPC

(43) Date of publication:
**24.09.2025 Bulletin 2025/39**

(21) Application number: **24780590.6**

(22) Date of filing: **28.03.2024**

(51) International Patent Classification (IPC):
*C08J 9/04* (2006.01)        *B29C 44/00* (2006.01)
*B29C 51/08* (2006.01)

(52) Cooperative Patent Classification (CPC):
**B29C 44/00; B29C 51/08; C08J 5/18; C08J 9/04; Y02W 90/10**

(86) International application number:
**PCT/JP2024/012549**

(87) International publication number:
**WO 2024/204489 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023052796**

(71) Applicant: **Sekisui Kasei Co., Ltd.**
**Kita-ku**
**Osaka-shi**
**Osaka 530-8565 (JP)**

(72) Inventors:
- **HAYASHI, Michihiro**
  **Osaka-shi, Osaka 530-8565 (JP)**
- **TAI, Tetsuro**
  **Osaka-shi, Osaka 530-8565 (JP)**

(74) Representative: **Hoffmann Eitle**
**Patent- und Rechtsanwälte PartmbB**
**Arabellastraße 30**
**81925 München (DE)**

(54) **FOAMED POLYLACTIC ACID RESIN SHEET AND METHOD FOR PRODUCING FORMED SHEET**

(57)    An expanded polylactic acid resin sheet suitable for efficiently producing a molded sheet article excellent in heat resistance is provided, and the production efficiency of a molded sheet article superior in heat resistance is improved. Provided is an expanded polylactic acid resin sheet comprised of a polylactic acid resin composition including a polylactic acid resin having crystallinity, the expanded polylactic acid resin sheet having a degree of crystallinity of 30% or less, and a crystallization temperature of 105°C or lower as observed by heat flux differential scanning calorimetric analysis at a heating rate of 5°C/min.

Fig. 1

EP 4 621 003 A1

**Description**

CROSS-REFERENCE TO RELATED APPLICATIONS

The present application claims priority to Japanese Patent Application No. 2023-052796, which is incorporated herein by reference.

TECHNICAL FIELD

The present invention relates to an expanded polylactic acid resin sheet and a production method for producing a molded sheet article using an expanded polylactic acid resin sheet.

BACKGROUND TECHNOLOGY

Conventionally, expanded products comprised of resin compositions in an expanded state have been widely used. The expanded products are superior in strength while being lightweight, and are superior in cushioning property and heat insulation. As this type of expanded products, expanded sheets and expanded beads, and molded articles and the like using them are known. As to a resin expanded sheet, an extruded expanded sheet obtained by a method (extrusion expansion method) in which a resin composition for expansion and a blowing agent are melted and kneaded in an extruder, and the obtained melt-kneaded product is extruded into a sheet shape and expanded from a sheeting die (a flat die or a circular die) attached to the tip of the extruder is known.
This type of extruded expanded sheet is used as a buffer sheet still in the form of a sheet, or is used as a packaging material or the like in the form of a bag. In addition, this type of extruded expanded sheet is also widely used as a raw material sheet for a molded sheet article such as a food tray or a cup. This type of molded sheet article is prepared by thermoforming such as matched mold forming or vacuum and pressure forming.
Incidentally, in recent years, measures against a problem that the landscape is impaired by packaging materials and the like illegally discarded in such places as hills and fields, rivers, and coasts have increasingly been demanded. Under such backgrounds, preparation of a molded article using a polylactic acid resin that can be biodegraded in the natural environment is being examined, and development of an expanded polylactic acid resin sheet in various applications is being examined.
Many of conventional expanded polylactic acid resin sheets are made from an amorphous polylactic acid resin, which is easily expanded. However, such an expanded polylactic acid resin sheet and a molded sheet article made of the expanded polylactic acid resin sheet hardly exhibit sufficiently favorable heat resistance. For this reason, opportunities where a crystalline polylactic acid resin is used are increasing. Accordingly, opportunities where an expanded polylactic acid resin sheet is produced with a resin composition including a polylactic acid resin having crystallinity are also increasing. Such an expanded polylactic acid resin sheet is more easily thermoformed when not crystallized. Therefore, in producing a molded sheet article from an expanded polylactic acid resin sheet prepared using a crystalline polylactic acid resin, an expanded polylactic acid resin sheet prepared with crystallization suppressed is used. In thermoforming, an operation of heating an expanded polylactic acid resin sheet for a certain period of time to increase the degree of crystallinity is performed (see, for example, paragraphs 0059 to 0061 of Patent Document 1 cited below).

PRIOR ART DOCUMENT

Patent Document

Patent Document 1: Japanese Patent No. 5517280

SUMMARY OF THE INVENTION

PROBLEMS TO BE SOLVED BY THE INVENTION

In the case of producing a molded sheet article using an expanded polylactic acid resin sheet including a crystalline polylactic acid resin, there is provided with a process referred to as "heat setting" in which the expanded polylactic acid resin sheet is held in a heated die for a certain period of time during thermoforming to increase the degree of crystallinity. When using an expanded polylactic acid resin sheet having a sufficiently low degree of crystallinity with intention to ensure good moldability, it takes time for heat setting and, as a result, the production efficiency of a molded sheet article is lowered. In view of the problems, an objective of the present invention is to provide an expanded polylactic acid resin sheet suitable for efficiently producing a molded sheet article superior in heat resistance, and to improve the production efficiency of a molded sheet article superior in heat resistance.

MEANS FOR SOLVING THE PROBLEM

To overcome the problem, the present invention provides

an expanded polylactic acid resin sheet comprised of a polylactic acid resin composition including a polylactic acid resin having crystallinity,
the expanded polylactic acid resin sheet having:

a degree of crystallinity of 30% or less, and
a crystallization temperature of 105°C or lower as observed by heat flux differential scanning calorimetric analysis at a heating rate of 5°C/min.

To overcome the problem, the present invention provides

a method for producing a molded sheet article in which the molded sheet article is produced by thermoforming a resin expanded sheet,
the resin expanded sheet
being an expanded polylactic acid resin sheet comprised of a polylactic acid resin composition including a polylactic acid resin having crystallinity, and
having
a degree of crystallinity of 30% or less, and
a crystallization temperature of 105°C or lower as observed by heat flux differential scanning calorimetric analysis at a heating rate of 5°C/min,
wherein a primary heating process of heating the expanded polylactic acid resin sheet, and
a secondary heating process of sandwiching the expanded polylactic acid resin sheet subjected to the primary heating process between heated molding dies to produce a molded sheet article and to increase a degree of crystallinity of the molded sheet article
are executed.

BRIEF DESCRIPTION OF THE DRAWINGS

Fig. 1 is a schematic front view showing one example of a sheet production apparatus for producing an expanded polylactic acid resin sheet.
Fig. 2 is a schematic view showing a method for determining a half-crystallization time from a DSC curve.
Fig. 3 is a schematic perspective view showing a method for measuring a gel fraction.

BEST MODE FOR CARRYING OUT THE INVENTION

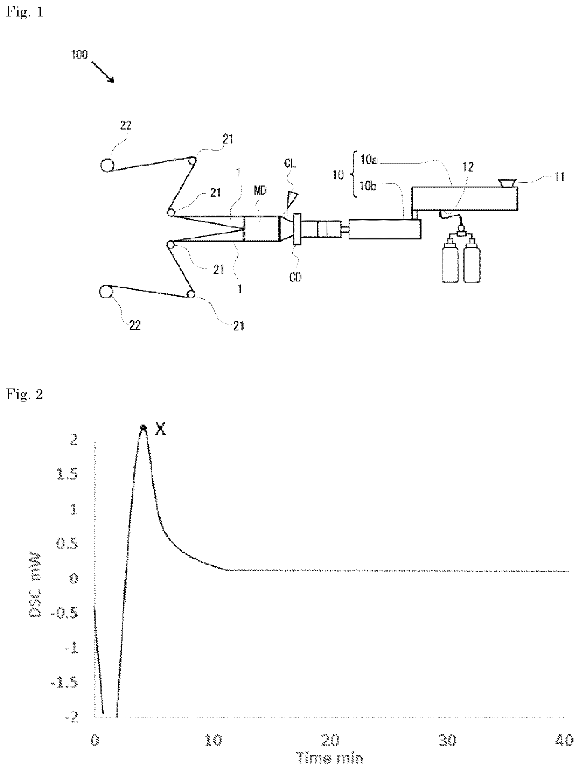

Embodiments of the present invention will be described below. In the following, an embodiment of the present invention will be described taking, as an example, a case where the expanded polylactic acid resin sheet is an extruded expanded sheet obtained with an apparatus illustrated in Fig. 1. The expanded polylactic acid resin sheet of the present embodiment can be suitably used for preparing a molded sheet article by thermoforming. Examples of the thermoforming include vacuum forming, pressure forming, vacuum and pressure forming, matched mold forming, and press forming.

As the expanded polylactic acid resin sheet of the present embodiment, for example, an extruded expanded sheet prepared with a sheet production apparatus 100 depicted in Fig. 1 or the like may be employed. The sheet production apparatus 100 illustrated in Fig. 1 includes a tandem extruder 10 and a circular die CD for discharging a polylactic acid resin composition melted and kneaded in the tandem extruder 10 into a tubular shape. Furthermore, the production apparatus includes a cooling device CL for air-cooling the expanded polylactic acid resin sheet extruded from the circular die CD into a tubular shape, and a mandrel MD for expanding the diameter of the tubular expanded polylactic acid resin sheet to form a tubular shape having a prescribed size.

The sheet production apparatus 100 includes a slitting device that slits the expanded polylactic acid resin sheet that has passed through the mandrel MD and formed into a cylindrical shape having a prescribed diameter to divide the expanded polylactic acid resin sheet into two belt-like sheets, and a winding roller 22 for winding the slit expanded polylactic acid resin sheet 1 after passing through a plurality of rollers 21.

An extruder located upstream of the tandem extruder 10 (hereinafter, also referred to as a "first extruder 10a") is provided with a hopper 11 for feeding a polylactic acid resin composition (hereinafter, also simply referred to as "resin composition") to be a raw material of the expanded polylactic acid resin sheet, and a gas introduction unit 12 for supplying a blowing agent such as a hydrocarbon into a cylinder.

The sheet production apparatus 100 of the present embodiment also includes an extruder (hereinafter also referred to as a "second extruder 10b") on the downstream side of the first extruder 10a. In the second extruder 10b, a resin composition including a blowing agent is melted and kneaded. The polylactic acid resin included in the expanded polylactic acid resin sheet has crystallinity. The polylactic acid resin is preferably modified by crosslinking or the like so as to exhibit a superior melt tension. As to a modified polylactic acid resin (hereinafter, also referred to as "modified polylactic acid resin"), a polylactic acid resin previously modified may be introduced from the hopper 11. Alternatively, when an expanded polylactic acid resin sheet is produced, an unmodified polylactic acid resin and a crosslinking agent may be introduced into an extruder and the polylactic acid resin may be modified in the extruder.

Expanded polylactic acid resin sheet are crystallized unless they are quickly cooled. The expanded polylactic acid resin sheet of the present embodiment is one prepared such that crystallization of the polylactic acid resin included therein is suppressed from proceeding by the cooling device CL or the mandrel MD during production. An expanded polylactic acid resin sheet including a sufficiently crystallized polylactic acid resin is hardly deformed even when heated. Such an expanded polylactic acid resin sheet is less likely to be deformed in conformity with the shape of a molding die in thermoforming. Such an expanded polylactic acid resin sheet is stretched by a strong force in thermoforming. The molded sheet article thus obtained is readily to shrink over time or shrink when heat is applied. Meanwhile, the expanded polylactic acid resin sheet of the present embodiment is prepared such that the expanded sheet has a degree of crystallinity of 30% or less. The lower the degree of crystallinity of the expanded polylactic acid resin sheet is, the better the moldability at the time of preparing a molded sheet article is. Therefore, the degree of crystallinity of the expanded polylactic acid resin sheet may be 25% or less, or 20% or less. Owing to the fact that the degree of crystallinity is 30% or less, excessive load of stretching in the molding die during thermoforming is suppressed and it is possible to suppress generation of shrinkage with time in the resulting molded sheet article.

When the expanded polylactic acid resin sheet has a certain degree of crystallinity or more, it is advantageous for making the molded sheet article exhibit crystallinity sufficient for exhibiting superior heat resistance. The degree of crystallinity of the expanded polylactic acid resin sheet may be 5% or more, or 10% or more.

The expanded polylactic acid resin sheet is preferably made to exhibit a higher degree of crystallinity than before heating by such a process as heat setting involving heating for a certain period of time. The expanded polylactic acid resin sheet is preferably formed such that the degree of crystallinity can be increased by 5% or more, and is preferably formed such that the degree of crystallinity can be increased by 10% or more. The degree of crystallinity that can be reached by the expanded polylactic acid resin sheet is preferably 25% or more, and more preferably 30% or more. The degree of crystallinity that can be reached by the expanded polylactic acid resin sheet is usually set to 60% or less. The degree of crystallinity that can be reached by the expanded polylactic acid resin sheet may be 50% or less.

The resin composition constituting the expanded polylactic acid resin sheet of the present embodiment preferably has a half-crystallization time at 80°C of 30 minutes or less. The half-crystallization time is more preferably within 25 minutes. Owing to the fact that the half-crystallization time of the resin composition that is the constituent material of the expanded polylactic acid resin sheet is 30 minutes or less, the expanded polylactic acid resin sheet can increase the degree of crystallinity of the molded sheet article in a shorter molding time during thermoforming, and can impart superior heat resistance to the molded sheet article.

(Half-Crystallization Time)

The half-crystallization time can be measured as follows using a heat flux differential scanning calorimeter (heat flux DSC).

The measurement is performed using the following sampling method and temperature conditions.

$5.5 \pm 0.5$ mg of a sample is filled on a bottom of a measurement container made of aluminum (manufactured by Hitachi High-Tech Science Corporation, product code: GAA-0065) such that no gaps are formed, and then, the container is closed with an aluminum lid (manufactured by Hitachi High-Tech Science Corporation, product code: GAA-0064). Subsequently, using a differential scanning calorimeter ("NEXTA DSC600" manufactured by Hitachi High-Tech Science Corporation), the closed container is retained at 30°C for 2 minutes under a nitrogen gas flow rate of 20 mL/min, and the temperature is raised from 30°C to 210°C at a rate of the maximum capacity of the apparatus (first temperature raising), and held for 10 minutes.

Thereafter, the container is taken out from the inside of the measuring device, allowed to stand at room temperature for 10 minutes, and then returned to the inside of the measuring device at 30°C.

In the second temperature raising, the temperature is raised to 70°C at a rate of the maximum capacity of the apparatus, then raised to 80°C at a rate of 20°C/min, and held for 30 minutes.

Alumina is used as a standard substance at that time.

(Method for Producing DSC Curve)

A DSC curve (see Fig. 2) is produced by reading a heat flow every 0.2 seconds from the start of the second temperature raising to the end of the holding time at the temperature raising end temperature, and plotting the time (min) on the horizontal axis and the heat flow (mW) on the vertical axis. In Fig. 2, the time from the start of the measurement to the peak top (point x) of the exothermic peak is defined as a half-crystallization time.

The resin composition includes a polylactic acid resin having crystallinity as a main component. The polylactic acid resin refers to a polymer containing 50 mol% or more of a lactic acid component unit. Examples of the polymer include:

(1) a polymer made up of only lactic acid,
(2) a copolymer made up of lactic acid and another aliphatic hydroxycarboxylic acid,
(3) a copolymer of lactic acid, an aliphatic polyhydric alcohol, and an aliphatic polycarboxylic acid,
(4) a copolymer made up of lactic acid and an aliphatic polycarboxylic acid,
(5) a copolymer made up of lactic acid and an aliphatic polyhydric alcohol, and
(6) a mixture composed of any combination of the (1) to (5).

Specific examples of the lactic acid include L-lactic acid, D-lactic acid, and DL-lactic acid, or cyclic dimers thereof, namely, L-lactide, D-lactide, and DL-lactide, or mixtures thereof.

Examples of the aliphatic polycarboxylic acid constituting the copolymer include oxalic acid, succinic acid, malonic acid, glutaric acid, adipic acid, pimelic acid, suberic acid, azelaic acid, undecanedioic acid, and dodecanedioic acid. The aliphatic polycarboxylic acid may be an anhydride.

Examples of the aliphatic polyhydric alcohol include ethylene glycol, diethylene glycol, triethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, tetramethylene glycol, and 1,4-cyclohexanedimethanol.

Examples of the aliphatic hydroxycarboxylic acid other than lactic acid constituting the copolymer include glycolic acid, 3-hydroxybutyric acid, 4-hydroxybutyric acid, 4-hydroxyvaleric acid, 5-hydroxyvaleric acid, and 6-hydroxycaproic acid.

The polylactic acid resin included in the resin composition may be only a crystalline polylactic acid resin, or may include a crystalline polylactic acid resin and an amorphous polylactic acid resin.

As the polylactic acid resin, one having an endothermic amount (ΔHendo) determined by heat flux differential scanning calorimetric measurement of, for example, 10 J/g or more may be used. The endothermic amount (ΔHendo) of the polylactic acid resin is preferably 20 J/g or more, and more preferably 30 J/g or more. The upper limit of the endothermic amount (ΔHendo) of the polylactic acid resin is not particularly limited, but is about 60 J/g.

In the present embodiment, the crystalline polylactic acid resin means one having an endothermic amount (ΔHendo) determined by heat flux differential scanning calorimetric measurement of more than 2 J/g. The endothermic amount (ΔHendo) of the crystalline polylactic acid resin is usually 20 to 65 J/g.

The polylactic acid resin included in the resin composition preferably includes a copolymer formed by copolymerizing a D-isomer and an L-isomer of lactic acid. The D-isomer ratio in the copolymer is preferably 0.5 mol% or more and 5 mol% or less. The polylactic acid resin including the copolymer preferably has a melting point of 130°C or higher and 170°C or lower. Such a polylactic acid resin has superior properties in expandability, moldability, and heat resistance.

For the expanded polylactic acid resin sheet in the present embodiment, a crystallization temperature of 105°C or lower is preferably confirmed by heat flux differential scanning calorimetric measurement at a heating rate of 5°C/min. The crystallization temperature of the expanded polylactic acid resin sheet is more preferably 100°C or lower, and still more preferably 98°C or lower. When the expanded polylactic acid resin sheet has a crystallization temperature equal to or lower than a prescribed temperature, the crystallization of the expanded polylactic acid resin sheet is accelerated when thermoforming is performed. Such an expanded polylactic acid resin sheet is superior in molding processability. In addition, to prevent the degree of crystallinity from being excessively increased in preliminary heating before thermoforming or the like, the crystallization temperature is preferably observed in the range of 70°C or higher, more preferably in the range of 75°C or higher, and still more preferably in the range of 80°C or higher.

(Melting Point, Crystallization Temperature, Degree of crystallinity)

The melting point, crystallization temperature, and degree of crystallinity of a polylactic acid resin, an expanded polylactic acid resin sheet, and a molded sheet article can be determined as follows.

The melting point and crystallization temperature of a polylactic acid resin, an expanded polylactic acid resin sheet, and a molded sheet article can be measured as follows using a heat flux differential scanning calorimeter (heat flux DSC).

The measurements are performed by the methods described in JIS K 7122:1987, JIS K 7122:2012 "Testing methods for heat of transitions of plastics", and JIS K 7121:1987, 2012 "Testing methods for transition temperatures of plastics".

The measurement may be performed using the following sampling method and temperature conditions.

$5.5 \pm 0.5$ mg of a sample is filled on a bottom of a measurement container made of aluminum (manufactured by Hitachi High-Tech Science Corporation, product code: GAA-0065) such that no gaps are formed, and then, the container is closed with an aluminum lid (manufactured by Hitachi High-Tech Science Corporation, product code: GAA-0064). Subsequently, using a differential scanning calorimeter ("NEXTA DSC600" manufactured by Hitachi High-Tech Science Corporation), heating and cooling of the sample are performed in the steps described below under a nitrogen gas flow rate of 20 mL/min, whereby a DSC curve is obtained.

(Step 1) The temperature is raised from 30°C to 210°C (first temperature raising), and then held for 10 minutes.
(Step 2) The container is taken out from the inside of the measuring device, allowed to stand at room temperature for 10 minutes, and then returned to the inside of the measuring device at 30°C. (Rapid cooling).
(Step 3) The temperature is raised from 30°C to 210°C (second temperature raising).

All the temperature raising is performed at a rate of 5°C/min.

Alumina is used as a standard substance.

(Melting Point)

Using the analysis software attached to the device, the temperature of the top of the melting peak observed in the second temperature raising process is read and taken as the melting temperature (melting point).

(Crystallization Temperature)

As to the crystallization temperature, the temperature at the top of an exothermic peak observed in the second temperature raising process is read, and taken as a (cold) crystallization temperature. When a plurality of exothermic peaks appear, the temperature is read at the lowest temperature peak.

(Degree of Crystallinity)

The degree of crystallinity is determined by dividing the difference between the endothermic amount (melting heat amount (J/g)) determined from the area of the endothermic peak appearing in the crystal melting observed in the first temperature raising process and the crystallization heat amount (J/g) determined from the area of the crystallization peak by the theoretical melting heat amount (93 J/g) of a polylactic acid perfect crystal.

The melting heat amount and the crystallization heat amount are calculated using the analysis software attached to the device.

Specifically, the melting heat amount is calculated from a part surrounded by a straight line binding a point at which a DSC curve leaves from a low temperature side base line and a point at which the DSC curve returns again to a high temperature side base line, and the DSC curve.

The crystallization heat amount is calculated from an area of a part surrounded by a straight line binding a point at which a DSC curve leaves from a low temperature side base line and a point at which the DSC curve returns again to a high temperature side, and the DSC curve.

Then, the degree of crystallinity is determined from the following formula.

Degree of crystallinity (%) = [melting heat amount (J/g) - crystallization heat amount (J/g)]/93 (J/g) $\times$ 100 (%)

The resin composition may include the polylactic acid resin at a ratio of 100% by mass, or may be a mixture of the polylactic acid resin and a thermoplastic resin other than the polylactic acid resin. The mixture may include the polylactic acid resin at a ratio of 50% by mass or more and less than 100% by mass, and may include the thermoplastic resin in a proportion of more than 0% by mass and 50% by mass or less. In other words, the resin composition may include a thermoplastic resin other than the polylactic acid resin at a ratio of 50% by mass or less.

When the resin composition includes a thermoplastic resin other than the polylactic acid resin, the ratio of the polylactic acid resin is preferably 60% by mass or more, and more preferably 70% by mass or more. Examples of the thermoplastic resin other than the polylactic acid resin include polyethylene-based resins, polypropylene-based resins, polystyrene-based resins, and polyester-based resins. The resin composition in the present embodiment preferably includes a thermoplastic elastomer or an aliphatic polyester resin from the viewpoint of improving the impact resistance of a molded sheet article made of an expanded polylactic acid resin sheet.

Examples of the thermoplastic elastomer include olefin-based elastomers, styrene-based elastomers, acrylic-based elastomers, and ester-based elastomers, and among them, acrylic-based elastomers, styrene-based elastomers, and ester-based elastomers, which have good compatibility with the polylactic acid resin, are preferable. The styrene-based elastomers are preferably acid-modified. Specifically, METABLEN W-600A manufactured by Mitsubishi Rayon Co., Ltd., TUFTEC MP10 manufactured by Asahi Kasei Corporation, NOF ALLOY TZ810 manufactured by NOF Corporation, and the like can be suitably used as commercial products.

The aliphatic polyester resin may be a hydroxy acid polycondensate, a ring-opening polymer of lactone, a polycondensate of a polyhydric alcohol component and a polycarboxylic acid component, or the like. Examples of the hydroxy acid polycondensate include polylactic acid and a polycondensate of hydroxybutyric acid. Examples of the ring-opening polymer of lactone include polycaprolactone and polypropiolactone. Examples of the polycondensate of a polyhydric alcohol component and a polycarboxylic acid component include polyethylene succinate, polybutylene succinate, polybutylene adipate, polybutylene succinate adipate, and polybutylene adipate terephthalate. Among them, the aliphatic polyester resin is preferably any of polybutylene succinate (PBS), polybutylene succinate adipate (PBSA), and polybutylene adipate terephthalate (PBAT), which have good compatibility with the polylactic acid resin.

The polylactic acid resin is preferably suitable for extrusion expansion. In extrusion expansion, it is generally known that an expanded sheet having a high expansion ratio can be obtained by using a resin having a high melt tension. Crystalline resins generally have a low melt tension. Therefore, in the case of extruding and expanding a crystalline resin, the crystalline resin is subjected to crosslinking such as chemical crosslinking or electron beam crosslinking in order to increase the melt tension of the resin composition. In addition, instead of a method of crosslinking a crystalline resin, a method of mixing a high molecular weight component to increase the melt tension of a resin composition is known.

The polylactic acid resin of the present embodiment preferably exhibits a specific characteristic value in measurement of melt tension at 190°C. The polylactic acid resin preferably exhibits, for example, a melt tension of 5 cN or more and 80 cN or less in measurement at 190°C. The melt tension of the polylactic acid resin may be 75 cN or less, 70 cN or less, or 65 cN or less. The melt tension of the polylactic acid resin may be 8 cN or more, or 10 cN or more. The polylactic acid resin can suppress the occurrence of foam breakage during expansion of the resin composition due to having a preferable melt tension as described above. An expanded polylactic acid resin sheet including such a polylactic acid resin is less likely to have a high open cell ratio even when it is expanded at a high expansion ratio. Such a polylactic acid resin can be advantageous for preparing an expanded polylactic acid resin sheet having a good appearance.

In the present embodiment, it is preferable that the resin composition including the polylactic acid resin as described above also exhibits the melt tension as described above.

The polylactic acid resin of the present embodiment has a melt mass-flow rate (MFR; temperature: 190°C, nominal load: 2.16 kg) of, for example, 0.1 g/10 min or more and 15 g/10 min or less. The melt mass-flow rate of the resin composition may be 10 g/10 min or less, 5 g/10 min or less, 4 g/10 min or less, or 3 g/10 min or less.

In the present embodiment, it is preferable that the resin composition including the polylactic acid resin as described above also exhibits the melt mass-flow rate as described above.

The melt tension and the melt mass-flow rate of the polylactic acid resin can be measured by the following methods.

<Melt Tension>

The melt tension can be measured using a "Capilograph 1D" (heating furnace special specification) capillary rheometer manufactured by Toyo Seiki Seisaku-sho, Ltd., and "Rheotens 71.97" manufactured by Goettfert.

The melt tension is measured under the following conditions.

The sample is vacuum-dried at 90°C for 4 hours or more in advance, and after the drying, the sample is vacuum-packaged in a nylon plastic bag for vacuum packing until immediately before measurement, and then stored in a desiccator.

The Rheotens 71.97 is installed such that the distance from the die outlet of the Capilograph 1D to the measurement unit is 80 mm. (It is noted that, in a case where the interference occurs as it is and it is not possible to bring the Rheotens close to 80 mm, the Rheotens is set at a prescribed place by taking a measure to avoid the interference.)

First, a sample is filled in a barrel heated to a test temperature of 190°C, and then preheated for 5 minutes.

The measurement time is set not to exceed 10 minutes including the preheating time after the filling in the barrel.

Next, a piston is inserted from the upper portion of the barrel to push out the molten resin in a string form.

At this time, the piston descending speed (20 mm/min) is kept constant, and the pushed string-form product is passed through a wheel of the Rheotens.

Thereafter, the take-up speed is gradually increased to measure the melt tension of the sample.

Regarding the measurement result, the average of a local maximum value and a local minimum value immediately before breakage of the string-form product is taken as the melt tension of the sample. When there is only one local maximum point in the tension chart, the local maximum value is taken as the melt tension. In addition, when the string-form product becomes thin and the winding falls into an idling state, this time point is regarded as a breaking point, and the average of the local maximum value and the local minimum value of the immediately preceding tension is taken as the melt tension of the sample.

(Measurement Conditions of Capilograph 1D)

Die: diameter: 2.095 mm, length: 8 mm, inflow angle: 90 degrees (conical)
Barrel diameter: 9.55 mm
Piston speed: 20 mm/min
Measurement temperature: 190°C

(Measurement Conditions of Rheotens)

Wheel gap: upper: 0.7 mm, lower: 1.0 mm
Acceleration: 10 mm/s$^2$
Take-up speed: initial speed: 6.92 mm/s

<Melt Mass-Flow Rate (MFR)>

The melt mass-flow rate (MFR) of a polylactic acid resin or a resin composition can be measured using "Semi-Auto Melt Indexer 2A" manufactured by Toyo Seiki Seisaku-sho, Ltd.

The MFR is measured under the following measurement conditions in accordance with a method for measuring the time during which a piston moves a prescribed distance described in JIS K 7210-1:2014 "Plastics - Determination of the melt mass-flow rate (MFR) and melt volume-flow rate (MVR) of thermoplastics - Part 1" Method B.

The sample for measurement is vacuum-dried at 90°C for 4 hours or more in advance, and after the drying, the sample is vacuum-packaged in a nylon plastic bag for vacuum packing until immediately before measurement, stored in a desiccator, and then subjected to measurement.

(Measurement Conditions)

Sample: 3 to 8 g
Preheating time: 200 seconds
Load hold: 30 seconds
Test temperature: 190°C
Test load: 21.18 N
Piston travel distance (interval): 4 mm
Number of tests: 3 times

The arithmetic mean of the measured values obtained in the tests is taken as the value of MFR (g/10 min).

The heat melting property as described above can be exhibited by imparting a bulky molecular structure to a polylactic acid resin. The polylactic acid resin preferably has a mass average molecular weight (Mw) of 100,000 or more and 1,000,000 or less. The mass average molecular weight (Mw) of the polylactic acid resin is more preferably 150,000 or more, and still more preferably 200,000 or more. The mass average molecular weight (Mw) of the polylactic acid resin is more preferably 800,000 or less, still more preferably 600,000 or less, and particularly preferably 400,000 or less.

In the polylactic acid resin of the present embodiment, the ratio (Mw/Mn) of the mass average molecular weight (Mw) to the number average molecular weight (Mn) is preferably 2.5 or more, more preferably 2.7 or more, and particularly preferably 2.9 or more. The ratio (Mw/Mn) of the polylactic acid resin is preferably 4.5 or less, more preferably 4.0 or less, and particularly preferably 3.5 or less.

The number average molecular weight (Mn) and the mass average molecular weight (Mw) of the polylactic acid resin can be measured using a gel permeation chromatograph (GPC), and can be determined as values in terms of polystyrene (PS). Specifically, the average molecular weight of the polylactic acid resin can be determined by the following procedure.

(Method for Determining Average Molecular Weight)

20 mg of a sample is dissolved in 6 mL of chloroform (immersion time: 6 ± 1.0 h), and the solution is filtered through a non-aqueous 0.45 $\mu$m syringe filter manufactured by Shimadzu GLC Ltd., and then measured using a chromatograph under the following measurement conditions, and the mass average molecular weight of the sample is determined from a standard polystyrene calibration curve prepared in advance.

<Device Used>

"HLC-8320GPC EcoSEC" gel permeation chromatograph (with built-in RI detector and UV detector) manufactured by Tosoh Corporation

<GPC Measurement Conditions>

Sample side

Guard column = TSKgel guard column HXL-H (6.0 mm × 4.0 cm) manufactured by Tosoh Corporation × 1 column
Measurement column = TSKgel GMHXL (7.8 mm I.D. × 30 cm) manufactured by Tosoh Corporation × 2 columns in series
Reference side = resistance tube (inner diameter 0.1 mm × 2 m) × 2 columns in series
Column temperature: 40°C
Mobile phase: chloroform

Mobile phase flow rate:

reference-side pump: 0.5 mL/min
Sample-side pump: 1.0 mL/min
Detector: RI detector
Injection volume: 50 $\mu$L
Measurement time: 25 min
Sampling pitch: 500 msec

As standard polystyrene samples for a calibration curve, those having product names "STANDARD SM-105" and "STANDARD SH-75" manufactured by Showa Denko K.K. and having mass average molecular weights of 5,620,000, 3,120,000, 1,250,000, 442,000, 151,000, 53,500, 17,000, 7,660, 2,900, and 1,320 were used.
The standard polystyrenes for a calibration curve are grouped into A (5,620,000, 1,250,000, 151,000, 17,000, and 2,900) and B (3,120,000, 442,000, 53,500, 7,660, and 1,320), then A is weighed (2 mg, 3 mg, 4 mg, 4 mg, and 4 mg) and then dissolved in 30 mL of chloroform, and B is also weighed (3 mg, 4 mg, 4 mg, 4 mg, and 4 mg) and then dissolved in 30 mL of chloroform.
A standard polystyrene calibration curve is obtained by preparing a calibration curve (cubic equation) from the retention times obtained after measurement carried out following injection of 50 $\mu$L of each of the prepared A and B solutions. The average molecular weight is calculated using the calibration curve.
The polylactic acid resin having such melting properties and molecular weight distribution can be obtained by modifying a commercially available polylactic acid resin. The modification can be performed, for example, by providing a crosslinked structure or a long chain branched structure in the molecular structure of the polylactic acid resin. The modification can be performed by increasing the molecular weight of the polylactic acid resin. For increasing the molecular weight of the polylactic acid resin, a chain extender such as carbodiimide can be used. In addition, the modification with the chain extender can be performed using a compound having one or a plurality of functional groups that can condense with a hydroxy group or a carboxyl group present in the molecular structure of the polylactic acid resin, such as an acrylic-based organic compound, an epoxy-based organic compound, and an isocyanate-based organic compound. The modification can be performed by a method of binding an acrylic-based organic compound, an epoxy-based organic compound, an isocyanate-based organic compound, or the like to a polylactic acid resin by a reaction.

The modification of the polylactic acid resin by crosslinking or long chain branching can be performed, for example, by a method of reacting the polylactic acid resins with a radical initiator. Among the modification methods described above, reacting polylactic acid resins together by a radical initiator is preferable in that other components can be inhibited from being contained in the expanded polylactic acid resin sheet. When polylactic acid resins are reacted together using a radical initiator having moderate reactivity in an extruder, a site of the polylactic acid resin which is easily decomposed is attacked by free radicals generated by the radical initiator. The site can be stabilized as a crosslinked point (branching point). The polylactic acid resin is improved in thermal stability by such modification, so that the polylactic acid resin becomes resistant to decrease in molecular weight during passing through an extruder. Examples of the radical initiator to be used for modification of the polylactic acid resin include organic peroxides, azo compounds, and halogen molecules. Among them, organic peroxides are preferable.

Examples of the organic peroxide to be used in the present embodiment include peroxyesters, hydroperoxides, dialkyl peroxides, diacyl peroxides, peroxydicarbonates, peroxyketals, and ketone peroxides.

Examples of the peroxyesters include t-butylperoxy 2-ethylhexyl carbonate, t-hexylperoxy isopropyl monocarbonate, t-hexyl peroxybenzoate, t-butyl peroxybenzoate, t-butyl peroxylaurate, t-butyl peroxy-3,5,5-trimethylhexanoate, t-butyl peroxyacetate, 2,5-dimethyl-2,5-di(benzoylperoxy)hexane, and t-butyl peroxyisopropyl monocarbonate.

Examples of the hydroperoxides include permethane hydroperoxide, diisopropylbenzene hydroperoxide, cumene hydroperoxide, and t-butyl hydroperoxide.

Examples of the dialkyl peroxides include dicumyl peroxide, di-t-butyl peroxide, and 2,5-dimethyl-2,5-di(t-butylperoxy)-hexyne-3.

Examples of the diacyl peroxides include dibenzoyl peroxide, di(4-methylbenzoyl) peroxide, and di(3-methylbenzoyl) peroxide.

Examples of the peroxydicarbonates include di(2-ethylhexyl) peroxydicarbonate and diisopropyl peroxydicarbonate.

Examples of the peroxyketals include 1,1-di-t-butylperoxy-3,3,5-trimethylcyclohexane, 1,1-di-t-butylperoxycyclohexane, 2,2-di(t-butylperoxy)-butane, n-butyl 4,4-di-(t-butylperoxy)valerate, and 2,2-bis(4,4-di-t-butylperoxycyclohexyl)propane.

Examples of the ketone peroxides include methyl ethyl ketone peroxide and acetyl acetone peroxide.

In the modification with an organic peroxide, there is a possibility that a component having an excessively large molecular weight, which becomes a gel at heat melting, is mixed into the polylactic acid resin after modification or a problem of the odor due to a decomposition residue of the organic peroxide is caused.

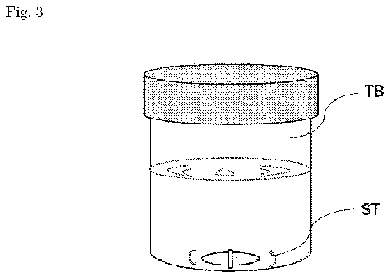

The gel contained in the polylactic acid resin may cause generation of coarse cells in an expanded layer or may cause generation of fine protrusions. The content of the gel (gel fraction) in the polylactic acid resin or the resin composition is preferably 4% by mass or less, more preferably 3% by mass or less, and still more preferably 2% by mass or less. When the gel content (gel fraction) is determined for the polylactic acid resin or the resin composition, the gel content can be determined by the following method using an instrument as depicted in Fig. 3.

<Method for Measuring Gel Content>

As a sample, pellets are used as received.

About 0.5 g of a sample is prepared, and the initial mass (m0 (g)) of the sample is precisely weighed. In addition, a 200 mesh wire mesh (wire diameter: $\varphi$0.05 mm) for filtering a solution in which the sample is dissolved is prepared. The initial mass (M0 (g)) of the wire mesh is also precisely weighed. The weighed measurement sample is placed in a 100 mL beaker (with symbol TB in Fig. 3). 50 mL of chloroform as a solvent and a stirrer bar are put in the beaker, and the beaker is covered with an aluminum foil. The mixture is stirred with a stirrer for 2 hours, and the measurement sample is dissolve at ambient temperature. After 2 hours, the aluminum foil is removed, and the solution in the beaker is filtered through a 200 mesh wire mesh. After the filtration, the wire mesh is naturally dried in a draft chamber for 24 hours. After the drying, the wire mesh is cooled in a desiccator. After the cooling, the wire mesh (M1 (g)) with a resin insolubles attached is weighed, and a gel fraction is calculated by the following formula.

$$\text{Gel fraction (\% by mass)} = m1/m0 \times 100$$

m0: Initial mass of sample
m1: Mass of resin insolubles (M1 - M0)
M0: Initial mass of wire mesh

EP 4 621 003 A1

M1: Total mass of resin insolubles and wire mesh

The organic peroxide is preferably a peroxyester from the viewpoint that the possibility of causing gel can be suppressed and it is easy to modify the polylactic acid resin into a state suitable for expansion. Among peroxyesters, the organic peroxide to be used for modifying the polylactic acid resin is preferably a peroxymonocarbonate-based organic peroxide such as a peroxymonocarbonate or a peroxydicarbonate. In the present embodiment, the organic peroxide to be used for modifying the polylactic acid resin is preferably a peroxymonocarbonate-based organic peroxide among peroxycarbonate-based organic peroxides, and particularly preferably t-butylperoxyisopropyl monocarbonate.

The organic peroxide as described above is usually used at a ratio of 0.1 parts by mass or more based on 100 parts by mass of the polylactic acid resin to be modified although depending on the molecular weight of the organic peroxide, and the like. The use amount of the organic peroxide is preferably 0.2 parts by mass or more, and particularly preferably 0.3 parts by mass or more. The use amount of the organic peroxide is preferably 2.0 parts by mass or less, more preferably 1.5 parts by mass or less, and particularly preferably 1.0 parts by mass or less.

Modifying the polylactic acid resin using the organic peroxide at such a ratio can make the polylactic acid resin after the modification suitable for expansion. When the use amount of the organic peroxide is 0.1 parts by mass or more, the effect of modification on the polylactic acid resin is more reliably exhibited. When the use amount of the organic peroxide is 2.0 parts by mass or less, the modified polylactic acid resin is less likely to contain a gel.

In the polylactic acid resin of the present embodiment, the value of the gel fraction thereof can be adjusted to, for example, 1.5% by mass or less by using a plurality of polylactic acid resins differing in MFR as starting materials. When a plurality of polylactic acid resins differing in MFR is used as a starting material, the value of the gel fraction may be adjusted to 1.0% by mass or less, or 0.8% by mass or less.

Examples of the component for expansion to be used when the polylactic acid resin as described above is formed into an extruded expanded sheet include a blowing agent and a cell regulator.

As the blowing agent, general blowing agents can be employed, and a volatile blowing agent that becomes a gas at ambient temperature (23°C) and normal pressure (1 atm), or a decomposable blowing agent that generates a gas by thermal decomposition can be employed. As the volatile blowing agent, for example, an inert gas, an aliphatic hydrocarbon, an alicyclic hydrocarbon, or the like can be employed. Examples of the inert gas include carbon dioxide and nitrogen. Examples of the aliphatic hydrocarbon include propane, normal butane, isobutane, normal pentane, and isopentane. Examples of the alicyclic hydrocarbon include cyclopentane and cyclohexane. In the present embodiment, among the above, normal butane and isobutane can be particularly preferably used.

Examples of the decomposable blowing agent include azodicarbonamide, dinitrosopentamethylenetetramine, sodium bicarbonate, and a mixture of an organic acid such as citric acid or a salt thereof and a bicarbonate.

Examples of the cell regulator include polytetrafluoroethylene, talc, aluminum hydroxide, and silica. The decomposable blowing agent can be used in combination with a volatile blowing agent to adjust an expanded state, and can also be used as a cell regulator.

Various additives may be added to the resin composition constituting the expanded polylactic acid resin sheet, as necessary. Examples of the additives include resins other than the polylactic acid resin, inorganic fillers, and various chemicals. Examples of the chemicals include a crystal nucleating agent, a lubricant, an antioxidant, an antistatic agent, a flame retardant, an ultraviolet absorber, a light stabilizer, a colorant, and an antibacterial agent. It is noted that the ratio of these additives in the resin composition is preferably 25 parts by mass or less, and more preferably 15 parts by mass or less based on 100 parts by mass of the polylactic acid resin.

The resin composition preferably includes a crystal nucleating agent. The crystal nucleating agent is preferably a substance that functions like a plasticizer and can promote crystallization of polylactic acid. As such a crystal nucleating agent, a reaction product (A) of (A1) at least one among polyols and polyol dehydration condensates, (A2) an alkylene oxide mainly composed of ethylene oxide, and (A3) a fatty acid having 12 to 24 carbon atoms is used.

Examples of the polyols of (A1) "polyols and polyol dehydration condensates" include glycerin, erythritol, pentaerythritol, xylitol, sorbitol, mannitol, galactitol, and maltitol. These are also advantageous in imparting impact resistance to an expanded polylactic acid resin sheet.

The (A2) "alkylene oxide mainly composed of ethylene oxide" indicates that more than half of the alkylene oxide is ethylene oxide, and it is intended to include those in which all of the alkylene oxide is ethylene oxide. When an alkylene oxide other than ethylene oxide is used in combination with ethylene oxide as the alkylene oxide, for example, propylene oxide, butylene oxide, or isobutylene oxide is used in combination.

Examples of the (A3) "fatty acid having 12 to 24 carbon atoms" include saturated fatty acids such as dodecanoic acid (lauric acid), tetradecanoic acid (myristic acid), pentadecanoic acid (pentadecylic acid), hexadecanoic acid (palmitic acid), heptadecanoic acid (margaric acid), octadecanoic acid (stearic acid), icosanoic acid (arachidic acid), henicosanoic acid (henicosylic acid), docosanoic acid (behenic acid), and tetracosanoic acid (lignoceric acid); and monounsaturated fatty acids such as myristoleic acid, palmitoleic acid, sapienic acid, oleic acid, elaidic acid, vaccenic acid, gadoleic acid, eicosenic acid, and erucic acid. The (A3) "fatty acid having 12 to 24 carbon atoms" may be a di-unsaturated fatty acid such as linoleic acid or a tri-unsaturated fatty acid such as linolenic acid, or may be a tetra-unsaturated fatty acid or a penta-unsaturated fatty acid. The (A3) "fatty acid having 12 to 24 carbon atoms" may be a mixture of a plurality of fatty acids such as coconut oil fatty acid, and the (A3) "fatty acid having 12 to 24 carbon atoms" is preferably dodecanoic acid (lauric acid), octadecanoic acid (stearic acid), or the like.

In the reaction product (A), the content of the oxyethylene group is preferably 20% by mass or more and 95% by mass or less in making the expanded polylactic acid resin sheet exhibit superior impact resistance. The content of the oxyethylene group in the reaction product (A) is more preferably 30% by mass or more and 95% by mass or less. The reaction product (A) may be a saturated ester in which all hydroxy groups of a polyol and a polyol dehydration condensate are esterified with a fatty acid or a partial ester in which some of hydroxy groups are esterified. In order to make the expanded polylactic acid resin sheet exhibit superior impact resistance, it is preferable that the reaction product (A) has a prescribed number of ester groups in the molecule on average. The average number of ester groups in the molecule of the reaction product (A) is preferably more than 2 and 9 or less, and more preferably more than 2.5 and 6 or less.

Examples of the method for producing the reaction product (A) include a method in which a polyol and a fatty acid are reacted together under heating to perform esterification of the polyol, and then ethylene oxide is subjected to an addition reaction in an autoclave under heating to obtain the reaction product (A). Alternatively, a dehydration condensate of a polyol may be reacted with a fatty acid to be esterified, and then ethylene oxide may be added in the same manner as in the method. Still alternatively, a fatty acid may be reacted after adding ethylene oxide to a polyol and a polyol dehydration condensate. In addition, there is also a method in which a fatty acid ester is synthesized in advance using a fatty acid and a monohydric alcohol having a small number of carbon atoms (methanol or ethanol), a transesterification reaction is performed with a polyol and a polyol dehydration condensate, and ethylene oxide is added in the same manner as the method to obtain the reaction product (A). In the resin composition in the present embodiment, the reaction product (A) thus obtained may be used alone, or two or more types of the reaction product may be used in combination.

As the crystal nucleating agent of the present embodiment, for example, the "(B) fatty acid amide" as shown below may be used in place of the "(A) reaction product". As the crystal nucleating agent of the present embodiment, one or more types of the reaction product (A) and one or more types of the fatty acid amide (B) may be used in combination.

The (B) fatty acid amide is preferably, for example, at least one fatty acid amide that is selected from the group consisting of fatty acid monoamides, fatty acid bisamides, hydroxy group-containing fatty acid monoamides, and hydroxy group-containing fatty acid bisamides and is derived from a fatty acid having 8 to 24 carbon atoms. The (B) fatty acid amide is more preferably a fatty acid bisamide such as N,N'-ethylene bisstearic acid amide or a hydroxy group-containing fatty acid bisamide such as N,N'-ethylene bis(12-hydroxystearic acid amide) or N,N'-xylylene bis(12-hydroxystearic acid amide). The fatty acid amide is effective for making the expanded polylactic acid resin sheet exhibit superior moldability. The fatty acid amide is also effective for making the molded sheet article exhibit superior heat resistance and impact resistance.

As the crystal nucleating agent, hydrocarbons such as liquid paraffin, paraffin wax, and synthetic polyethylene wax; metal soaps such as zinc stearate, calcium stearate, magnesium stearate; polyethylene glycols having a structure in which ethylene glycol, diethylene glycol, and tri- or more ethylene glycols are polycondensed; polypropylene glycols having a structure in which propylene glycol, dipropylene glycol, and tri- or more propylene glycols are polycondensed; 1,3-butylene glycol, 1,4-butylene glycol, and polybutylene glycols which are multimers of 1,3-butylene glycol and 1,4-butylene glycol; polyhydric alcohols such as glycerin, diglycerin, and higher polyglycerins can also be used.

The crystal nucleating agent that functions like a plasticizer and whose examples are enumerated above may cause a phenomenon called "bleed out" in which the crystal nucleating agent migrates to a surface layer portion of the expanded polylactic acid resin sheet and exudes from the surface. In particular, the fatty acid amide easily bleeds out from the expanded polylactic acid resin sheet during thermoforming. This may be generally regarded as a problem, but it may be advantageous in generating moderate slippage between a molding die and the expanded polylactic acid resin sheet and improving the uniformity of the thickness of the molded sheet article. That is, when good slippage is not exhibited between a molding die and an expanded polylactic acid resin sheet, there is a possibility that the expanded polylactic acid resin sheet is locally stretched to form a thin portion in the resulting molded sheet article. Meanwhile, by use of a fatty acid amide as a crystal nucleating agent, such a problem can be avoided from arising. In addition, the fact that bleeding out easily occurs means that the amount of the fatty acid amide remaining in the molded sheet article is reduced, and thus it is possible to suppress the occurrence of distortion due to further crystallization when the molded sheet article is heated in an unintended manner.

The crystal nucleating agent may be used at a ratio of 0.5 parts by mass or more and 15 parts by mass or less to 100 parts by mass of the polylactic acid resin. The ratio of the crystal nucleating agent may be 1 part by mass or more, and may be 1.5 parts by mass or more. The ratio of the crystal nucleating agent to 100 parts by mass of the polylactic acid resin may be 10 parts by mass or less, and may be 5 parts by mass or less.

The expanded polylactic acid resin sheet in the present embodiment can be prepared by performing a process of modifying a polylactic acid resin using a twin screw extruder or the like (modification process) and a process of extruding and expanding a polylactic acid resin composition including the modified polylactic acid resin through an extruder having a circular die attached to the tip thereof (extrusion expansion process).

In the modification process, for example, the modified polylactic acid resin may be pelletized immediately after the modification using a twin screw extruder equipped with a granulating die (hot cut die). The twin screw extruder to be used in the modification process may be equipped with a strand die or a T-die, and a strand or a sheet made of the modified polylactic acid resin may be prepared in the modification process, and thereafter, a process of cutting the strand or the sheet to form granules may be separately performed. As described above, the extrusion expansion process may be performed continuously to the modification process using a tandem extruder.

In the extrusion expansion process as described above, the resin composition in the present embodiment does not stretch in an easy manner, and resin films that define cells are unlikely to become excessively thin. That is, in the expanded polylactic acid resin sheet of the present embodiment, when resin films including a polylactic acid resin as described above are stretched by the expansion force generated by the blowing agent, a certain level or more of resistance is exhibited. In addition, the expanded polylactic acid resin sheet of the present embodiment is likely to have a state in which the central portion of each resin film is thin and the peripheral portion is thick. Thus, the expanded polylactic acid resin sheet of the present embodiment exhibits superior mechanical properties due to the fact that such thick resin films are three-dimensionally connected throughout the sheet.

In the expanded polylactic acid resin sheet of the present embodiment, even when cells are broken during expansion and a hole is formed in a resin film, the resin film surrounding the hole is not kept as it is, but shrinks to increase the thickness in a form effective for exhibiting strength, so that superior strength can be exhibited even when the expanded polylactic acid resin sheet has open cells at a certain ratio.

The apparent density of the expanded polylactic acid resin sheet is preferably 63 $kg/m^3$ or more and 500 $kg/m^3$ or less, and more preferably 83 $kg/m^3$ or more and 250 $kg/m^3$ or less. Owing to the fact that the apparent density of the expanded polylactic acid resin sheet is 63 $kg/m^3$ or more, there is an advantage that the molded sheet article of the present embodiment has high strength, and further, the thermoformability of the expanded polylactic acid resin sheet is improved, so that a molded article in which the shape of the die is accurately reflected is obtained.

Owing to the fact that the expanded polylactic acid resin sheet has an apparent density of 500 $kg/m^3$ or less, there is an advantage that it becomes easy to make the molded sheet article of the present embodiment remarkably exhibit characteristics as an expanded article such as lightweight, heat insulation, and cushioning property.

The thickness of the expanded polylactic acid resin sheet is preferably 0.5 mm or more and 7 mm or less, more preferably 0.5 mm or more and 5 mm or less, and still more preferably 0.7 mm or more and 3 mm or less. Owing to the fact that the thickness of the expanded polylactic acid resin sheet is 0.5 mm or more, there is an advantage that the molded sheet article of the present embodiment has high strength. Owing to the fact that the thickness of the expanded polylactic acid resin sheet is 7 mm or less, the thermoformability is improved, and as a result, the molded sheet article in the present embodiment has a reduced unevenness in thickness.

<Apparent Density>

The apparent density ($kg/m^3$) of an expanded polylactic acid resin sheet can be determined by dividing the mass per unit area (basis weight: $g/m^2$) of the expanded polylactic acid resin sheet by the thickness (mm) of the expanded polylactic acid resin sheet. The basis weight can be determined by arithmetically averaging values measured for a plurality of samples cut out from the expanded polylactic acid resin sheet. The basis weight of an expanded polylactic acid resin sheet can be determined from the following formula using the mass W (g) and the area S ($cm^2$) of a measurement sample cut out from the expanded polylactic acid resin sheet such that the dimension in the extrusion direction (MD) is 20 cm and the dimension in the width direction (TD) is the entire width.

Basis weight ($g/m^2$) = W/S $\times$ 10,000
The apparent density can be determined by the following calculation.
Apparent density ($kg/m^3$) = basis weight ($g/m^2$) $\div$ thickness (mm)

<Thickness>

The thickness of an expanded polylactic acid resin sheet can be determined from an enlarged photograph of a section obtained by cutting the expanded polylactic acid resin sheet in a plane orthogonal to the expanded polylactic acid resin sheet, and is determined, for example, as an average value of a plurality of places (for example, 20 places) randomly selected.

The expanded polylactic acid resin sheet preferably has a prescribed average cell diameter. The average cell diameter is preferably 0.1 mm or more and 1 mm or less, more preferably 0.1 mm or more and 0.8 mm or less, and still more preferably 0.1 mm or more and 0.6 mm or less. Owing to the fact that the expanded polylactic acid resin sheet has an average cell diameter of 0.1 mm or more, the open cell ratio tends to be a low value. As a result, there is an advantage that a molded sheet article having a small apparent density is easily obtained. As a result, there is an advantage that the thermoformability of the expanded polylactic acid resin sheet is improved and the thickness unevenness of the molded sheet article can be reduced. Owing to the fact that the average cell diameter of the expanded polylactic acid resin sheet is 1 mm or less, the molded sheet article of the present embodiment has good properties such as heat insulation and cushioning property. The average cell diameter in the molded sheet article of the present embodiment is preferably the same value as the average cell diameter of the expanded polylactic acid resin sheet as described above.

(Average Cell Diameter)

The average cell diameter can be measured in accordance with the testing method of ASTM D2842-69.

Specifically, an expanded polylactic acid resin sheet is cut along the extrusion direction (MD) and the width direction (TD) orthogonal to the extrusion direction, and a central portion of each section is enlarged with a scanning electron microscope (S-3000N manufactured by Hitachi, Ltd.) and two photographs are taken at different positions.

Next, the captured images are printed on A4 sheets, and three straight lines 60 mm long are drawn on each image. Straight lines are drawn parallel to MD for the section cut along MD, and straight lines are drawn parallel to TD for the section cut along TD. Further, in the thickness direction (VD), straight lines are drawn on one image of each of MD and TD. At this time, the magnification in the electron microscope is adjusted such that six or more cells are present on each straight line.

Then, the average chord length (t) of cells is calculated from the average number of cells in each direction present on the six straight lines drawn in each of the directions specified above by the following formula, and the cell diameter in each direction (MD, TD, VD) is calculated from the average chord length by the following formula.

$$\text{Average chord length t} = 60 \ (\text{mm})/(\text{number of cells} \times \text{magnification of photograph})$$

$$\text{Cell diameter D} = t/0.616 \ (\text{mm})$$

In drawing a straight line, the straight line is drawn such that the straight line penetrates cells as much as possible without coming into contact with the cells at points. Where some cells come into point contact with a straight line, the cells are also included in the number of cells, and where both ends of the straight line are located in cells without penetrating the cells, the cells in which both the ends of the straight line are located are also included in the number of cells.

Then, a geometric average value of the obtained cell diameter ($D_{MD}$) in MD, cell diameter ($D_{TD}$) in TD, and cell diameter ($D_{VD}$) in VD is defined as the average cell diameter of the expanded polylactic acid resin sheet. That is, the average cell diameter of the expanded polylactic acid resin sheet is calculated by the following formula.

$$\text{Average cell diameter (mm)} = (D_{MD} \times D_{TD} \times D_{VD})^{1/3}$$

The open cell ratio of the expanded polylactic acid resin sheet is preferably 50% or less, more preferably 40% or less, and still more preferably 30% or less. Owing to the fact that the open cell ratio of the expanded polylactic acid resin sheet is 50% or less, there is an advantage that the mechanical strength and the secondary expandability during thermoforming of the expanded polylactic acid resin sheet are excellent. In addition, the molded sheet article produced from such an expanded polylactic acid resin sheet is superior in mechanical strength and is also superior in appearance such as die reproducibility. In the present embodiment, the open cell ratio of the molded sheet article itself is also preferably the value. The open cell ratio can be determined as follows.

(Open Cell Ratio)

The open cell ratio can be determined by the following method.

A plurality of sheet-shaped samples 25 mm in length and 25 mm in width are cut out from an expanded polylactic acid resin sheet. The cut samples are superimposed on each other such that no spaces are formed, whereby a test piece having a thickness of 21 to 23 mm is formed. Three test pieces are prepared. The test pieces are conditioned for 16 hours under an environment of JIS K 7100:1999 Symbol 23/50, Class 2, and their thickness (mm) is measured. For the measurement of the thickness, for example, a caliper "Digimatic Caliper" manufactured by Mitutoyo Corporation can be used. The thickness is measured up to 1/100 mm, and the apparent volume ($cm^3$) is obtained from the obtained thickness.

Next, the volume ($cm^3$) of the test pieces is measured under the environment using a dry-process automatic densimeter (for example, "AccuPyc II 1340-100cc" manufactured by Shimadzu Corporation).

The measurement conditions are as follows.

Gas used: nitrogen
Container used: 35 cc
Packing pressure: 0.005 psig
Pressure equilibrium end rate: 0.005 psig/min
Number of repetitions: 1

Then, the open cell ratio (%) of each test piece is calculated by the following formula, and the average value is taken as the apparent density of the expanded polylactic acid resin sheet.

Open cell ratio (%) = [(apparent volume - volume measured with dry-process automatic densimeter)/apparent volume] × 100 (%)

Next, a method for producing the molded sheet article of the present embodiment will be described.

The method for producing a molded sheet article of the present embodiment is a method of forming a molded sheet article by executing a primary heating process of heating the expanded polylactic acid resin sheet and a secondary heating process of producing a molded sheet article by sandwiching the expanded polylactic acid resin sheet subjected to the primary heating process between heated molding dies to produce a molded sheet article and to increase a degree of crystallinity of the molded sheet article.

In the primary heating process, as a method of heating the expanded polylactic acid resin sheet, a known method such as a method of sandwiching the expanded polylactic acid resin sheet with heating plates or a method of heating the expanded sheet with an electric heater can be employed. In the primary heating process in the method for producing a molded sheet article of the present embodiment, the expanded polylactic acid resin sheet is heated such that the surface temperature preferably is 60°C or higher, more preferably 70°C or higher, still more preferably 80°C or higher, and particularly preferably 90°C or higher. The heating in the primary heating process is preferably executed such that the surface temperature of the expanded polylactic acid resin sheet is 130°C or lower, and more preferably 120°C or lower.

In the method for producing a molded sheet article of the present embodiment, the surface temperature of the expanded polylactic acid resin sheet in the primary heating process reaches a temperature as described above, whereby the transferability of the molding die is improved. Furthermore, when the primary heating process is performed at a temperature as described above, the softened state of the expanded polylactic acid resin sheet becomes favorable, and the expanded polylactic acid resin sheet is inhibited from being broken at the time of molding. In the method for producing a molded sheet article of the present embodiment, the surface state of the expanded polylactic acid resin sheet is improved by setting the surface temperature of the expanded polylactic acid resin sheet in the primary heating process to preferably 130°C or lower, and more preferably 120°C or lower. Furthermore, when the primary heating process is performed at such a temperature, moderate crystallization proceeds at the stage of the primary heating process, the degree of crystallinity in the resulting molded sheet article increases, and a molded sheet article having superior heat resistance is easily obtained.

In the secondary heating process, a mold in which a male die and a female die are paired is suitably used as the molding die. In the secondary heating process, the expanded polylactic acid resin sheet heated and softened in the primary heating process is sandwiched between the heated male die and female die, whereby a molded sheet article is formed. In the secondary heating process, the degree of crystallinity of the molded sheet article can be increased with time by maintaining that sandwiched state for a certain period of time.

The secondary heating process is performed by adjusting the temperature of the molding die to preferably 50°C or higher, more preferably 60°C or higher, and still more preferably 70°C or higher. The secondary heating process is performed by adjusting the temperature of the molding die to preferably 130°C or lower, and more preferably 120°C or lower. Adjusting the temperature of the molding die to 50°C or higher in the secondary heating process leads to an advantage that the degree of crystallinity of the molded sheet article easily increases. In addition, adjusting the temperature of the molding die to 50°C or higher in the secondary heating process also leads to an advantage that the time for crystallization is easily shortened and productivity is easily improved. In addition, adjusting the temperature of the heated molding die to 130°C or lower in the secondary heating process leads to an advantage that the surface state of the molded sheet article is improved.

In the method for producing a molded sheet article of the present embodiment, from the viewpoint of obtaining an expanded polylactic acid resin sheet in which the difference between the endothermic amount and the exothermic amount is within a preferable range, it is preferable to adjust the temperature immediately after the expanded polylactic acid resin sheet obtained by the extrusion expansion method is extruded. The temperature adjustment method may be, for example, a method of cooling with air, water, or the like, or a method of keeping (increasing) the temperature with heated air, hot water, or the like. The molded sheet article formed by the method for producing a molded sheet article of the present embodiment is a molded article superior in heat resistance. Since the molded sheet article of the present embodiment is superior in heat resistance, the molded sheet article can be suitably used as a food packaging container such as a lunch box, a cup noodle container, or a microwavable container.

The examples described above relating to the expanded polylactic acid resin sheet and the molded sheet article of the present embodiment and the methods for producing the same are merely limiting examples, and the present invention is not limited to the above examples at all, and can be implemented by appropriately modifying the above examples.

As described above, the present embodiment includes the following disclosure.

(1) An expanded polylactic acid resin sheet comprised of a polylactic acid resin composition including a polylactic acid resin having crystallinity,
the expanded polylactic acid resin sheet having:

a degree of crystallinity of 30% or less, and
a crystallization temperature of 105°C or lower as observed by heat flux differential scanning calorimetric analysis at a heating rate of 5°C/min.

(2) The expanded polylactic acid resin sheet according to (1), wherein the polylactic acid resin composition has a half-crystallization time at 80°C of 30 minutes or less.

(3) The expanded polylactic acid resin sheet according to (1) or (2), wherein the polylactic acid resin composition includes the polylactic acid resin that is a copolymer in which a D-isomer and an L-isomer of lactic acid are copolymerized, the copolymer has a content of the D-isomer of 0.5 mol% or more and 5 mol% or less, and the copolymer has a melting point of 130°C or more and 170°C or less.

(4) The expanded polylactic acid resin sheet according to any one of (1) to (3), having an apparent density of 63 kg/m$^3$ or more and 500 kg/m$^3$ or less.

(5) The expanded polylactic acid resin sheet according to any one of (1) to (4), having a thickness of 0.5 mm or more and 7 mm or less.

(6) The expanded polylactic acid resin sheet according to any one of (1) to (5), having an open cell ratio of 50% or less.

(7) The expanded polylactic acid resin sheet according to any one of (1) to (6), wherein the polylactic acid resin composition includes a modified polylactic acid resin that is a product of modification by an organic peroxide as the polylactic acid resin.

(8) The expanded polylactic acid resin sheet according to any one of (1) to (7), wherein the polylactic acid resin composition includes a crystal nucleating agent.

(9) A method for producing a molded sheet article in which the molded sheet article is produced by thermoforming a resin expanded sheet,

the resin expanded sheet
being an expanded polylactic acid resin sheet comprised of a polylactic acid resin composition including a polylactic acid resin having crystallinity, and
having
a degree of crystallinity of 30% or less, and
a crystallization temperature of 105°C or lower as observed by heat flux differential scanning calorimetric analysis at a heating rate of 5°C/min,
wherein a primary heating process of heating the expanded polylactic acid resin sheet, and
a secondary heating process of sandwiching the expanded polylactic acid resin sheet subjected to the primary heating process between heated molding dies to produce a molded sheet article and to increase a degree of crystallinity of the molded sheet article
are executed.

(10) The method for producing a molded sheet article according to (9), wherein in the primary heating process, the expanded polylactic acid resin sheet is heated such that a surface temperature reaches 60°C or higher and 130°C or lower.

(11) The method for producing a molded sheet article according to (9) or (10), wherein in the secondary heating process, a temperature of the molding dies is adjusted to 50°C or higher and 130°C or lower.

According to the invention as described above, an expanded polylactic acid resin sheet suitable for efficiently producing a molded sheet article superior in heat resistance is provided, and the production efficiency of a molded sheet article superior in heat resistance can be improved.

EXAMPLE 1

Next, the present invention will be described in more detail with reference to Examples, but the present invention is not limited thereto.

(Reference Production Example 1)

(1) Preparation of modified polylactic acid resin

100 parts by mass of a polylactic acid resin (MFR = 10.0 g/10 min, density =1,240 kg/m$^3$) and 0.5 parts by mass of t-butylperoxyisopropyl monocarbonate (1 minute half-life temperature T1:158.8°C) were stirred and mixed with a ribbon blender, affording a mixture.
The resulting mixture was fed into a twin screw extruder (L/D = 31.5) having a barrel diameter of 57 mm.
The set temperature of the feed section was set to 170°C and the subsequent temperature was set to 230°C, the mixture was melted and kneaded in a twin screw extruder under the condition of a rotation speed of 150 rpm, and the kneaded product was extruded into a strand shape at a discharge rate of 50 kg/h through a die having a diameter of 3 mm and 18 holes attached to the tip of the extruder.
Then, the extruded strand-shaped kneaded product was cooled by being passed through a 2 m-long cooling water bath containing water at 30°C.
The cooled strand was cut with a pelletizer, affording pellets of a modified polylactic acid resin.

(Reference Production Examples 2 to 5)

In Reference Production Examples 2 to 5, a modified polylactic acid resin was prepared in the same manner as in Reference Production Example 1 except that the type of the polylactic acid resin and the addition amount of the organic peroxide (the addition amount (parts by mass) based on 100 parts by mass of the polylactic acid resin) were changed.

(Reference Examples 1 and 2)

Reference Examples 1 and 2 are commercially available polylactic acid resins, which are raw materials before performing the reaction shown above.
The types of the polylactic acid resin and the organic peroxide used in Reference Production Examples 1 to 5, the addition amount (parts by mass) of the organic peroxide based on 100 parts by mass of the polylactic acid resin, and the physical properties of the obtained polylactic acid resins are shown in Table 1.

[Table 1]

| | | | Reference Production Example 1 | Reference Production Example 2 | Reference Production Example 3 | Reference Production Example 4 | Reference Production Example 5 | Reference Example 1 | Reference Example 2 |
|---|---|---|---|---|---|---|---|---|---|
| Formulation | Type of polylactic acid resin | - | a | b | c | d | d | a | b |
| | Type of organic peroxide | - | X | X | X | X | X | - | - |
| | Organic peroxide | Part by mass | 0.5 | 0.5 | 0.5 | 0.5 | 0.7 | - | - |
| | Melt mass-flow rate (MFR) | g/10 min | 1.5 | 2.2 | 1.3 | 4.4 | 1.4 | 10 | 4.0 |
| | Melt tension | cN | 49.9 | 51 | 35.7 | 31 | 65 | 0.5 | 2.7 |
| Physical properties of modified/ unmodified polylactic acid resin | Gel fraction | % by mass | 0.7 | 1.6 | 0.8 | Lower limit of quantitation or less | 8.3 | Not measured | Not measured |
| | Mass average molecular weight (Mw) | $\times 10^3$ | 353 | 404 | 362 | 276 | 297 | 140 | 220 |
| | Dispersity index (Mw/Mn) | - | 3.53 | 3.40 | 3.71 | 6.23 | 3.90 | 2.20 | 1.90 |
| | Melting point | °C | 164 | 148 | 160 | 153 | 152 | 165 | 150 |
| | Crystallization temperature | °C | 98 | 99 | 100 | 114 | 108 | 135 | 116 |

Type a of polylactic acid resin:MFR = 10.0 g/min, melt tension = 0.5 cN, D-isomer content = 1.5 to 2.5 mol%, melting point = 165°C
Type b of polylactic acid resin:MFR = 4.0 g/min, melt tension = 2.0 cN, D-isomer content = 3.5 to 4.5 mol%, melting point = 150°C
Type c of polylactic acid resin:MFR = 15.0 g/min, melt tension = lower limit of measurement or less, D-isomer content = 1.5 to 2.5 mol%, melting point = 160°C
Type d of polylactic acid resin:MFR = 7.5 g/min, melt tension = 3 cN, D-isomer content = 4.7 mol%, melting point = 152°C
Type X of organic peroxide: t-butyl isopropyl monocarbonate, 75% solution (solvent: isododecane)

(Preparation of Polylactic Acid Expanded Sheet)

(Example 1)

100 parts by mass of the polylactic acid resin obtained in Reference Production Example 1 and 1.0 parts by mass of a cell regulator ("CROWN TALC" manufactured by Matsumura Sangyo Co., Ltd.) were dry-blended to prepare a mixture.
The mixture was fed through a hopper to a first extruder (barrel diameter: φ50 mm) in a tandem extruder including the first extruder (upstream side) having a barrel diameter of φ50 mm and a second extruder (downstream side) having a barrel diameter of φ65 mm, and heated and melted in the first extruder.
Thereafter, butane (isobutane/normal butane = 70/30) as a blowing agent was pressed into the first extruder and melted and mixed together with the mixture.
Then, the molten mixture was transferred to the second extruder having a barrel diameter of 65 mm, uniformly cooled to a temperature suitable for extrusion expansion, and then extruded and expanded through a circular die having a diameter of 70 mm at a discharge rate of 30 kg/h, affording a cylindrical expanded article.
The resulting cylindrical expanded article was disposed along a φ206 mm-diameter mandrel whose inside was cooled with water at about 20°C, and an outer surface of the cylindrical expanded article was cooled and formed by blowing air with an air ring larger than the diameter of the cylindrical expanded article. The cylindrical expanded article was incised with a cutter at one point on the circumference, affording a belt-like expanded polylactic acid resin sheet.

(Example 2)

An expanded polylactic acid resin sheet was obtained in the same manner as in Example 1 except that 10 parts by mass of a crystal nucleating agent (product name "TRIBIO S-920MB" manufactured by DKS Co., Ltd.) was added to 100 parts by mass of the polylactic acid resin.

(Example 3)

An expanded polylactic acid resin sheet was obtained in the same manner as in Example 1 except that 2 parts by mass of a crystal nucleating agent (product name "ITOHWAX J-530" (fatty acid amide) manufactured by Itoh Oil Chemicals Co., Ltd.) was added to 100 parts by mass of the polylactic acid resin.

(Example 4)

An expanded polylactic acid resin sheet was obtained in the same manner as in Example 3 except that the polylactic acid resin to be used was changed to the one obtained in Reference Production Example 2.

(Example 5)

An expanded polylactic acid resin sheet was obtained in the same manner as in Example 3 except that the addition amount of the crystal nucleating agent was changed from 2 parts by mass to 3 parts by mass.

(Example 6)

An expanded polylactic acid resin sheet was obtained in the same manner as in Example 1 except that 3 parts by mass of polyethylene glycol (PEG-4000P) were added as a crystal nucleating agent based on 100 parts by mass of the polylactic acid resin.

(Example 7)

An expanded polylactic acid resin sheet was obtained in the same manner as in Example 1 except that product names "ITOHWAX J-530" and "PEG-4000P" were used in combination as crystal nucleating agents, and the addition amount of each of them was 3 parts by mass (6 parts by mass in total) based on 100 parts by mass of the polylactic acid resin.

(Example 8)

An expanded polylactic acid resin sheet was obtained in the same manner as in Example 1 except that the polylactic acid resin to be used was changed to the one obtained in Reference Production Example 3.

(Example 9)

An expanded polylactic acid resin sheet was obtained in the same manner as in Example 3 except that the polylactic acid resin to be used was changed to the one obtained in Reference Production Example 4.

(Comparative Example 1)

An expanded polylactic acid resin sheet was obtained in the same manner as in Example 1 except that product names "ITOHWAX J-530" and "PEG-4000P" were used in combination as crystal nucleating agents, and the addition amount of the product name "ITOHWAX J-530" was 1 part by mass and the addition amount of the trade name "PEG-4000 P" was 4 parts by mass based on 100 parts by mass of the polylactic acid resin.

(Comparative Example 2)

An expanded polylactic acid resin sheet was obtained in the same manner as in Example 1 except that the polylactic acid resin to be used was changed to the one obtained in Reference Production Example 4.

(Comparative Example 3)

An expanded polylactic acid resin sheet was obtained in the same manner as in Example 1 except that the polylactic acid resin to be used was changed to the one obtained in Reference Production Example 5.

(Comparative Examples 4 and 5)

An attempt was made to prepare an expanded polylactic acid resin sheet in the same manner as in Example 1 except that the polylactic acid resin to be used was changed to Reference Example 1 (Comparative Example 4) and Reference Example 2 (Comparative Example 5), but the melt tension of the resins was low, and an expanded polylactic acid resin sheet in a good state could not be obtained.

<Molding>

A planar square test piece being 340 mm long and 340 mm wide was cut out from the expanded polylactic acid resin sheet of each example. Using a single station molding machine (product name "FM-3A" manufactured by Tosei Sangyo Co., Ltd.), the average temperature of the upper heater of the single station molding machine was set to 300°C, and the average temperature of the lower heater was set to 300°C.

Next, the test piece was introduced into the single station molding machine, and heated for 30 seconds. Then, using a molding die heated and held at 100°C, five molded sheet articles (expanded containers) each having an opening at the top were prepared for each Example by thermoforming. The surface temperature of the expanded polylactic acid resin sheet in the primary heating process under the conditions was about 120°C. The container had an inverted quadrangular truncated pyramid shape with a square bottom surface, and the dimensions of each part were as follows.

Opening: 140 mm × 150 mm
Bottom surface: 110 mm × 110 mm
Height: 60 mm

The degree of crystallinity of each container obtained and the shrinkage rate during heating (hereinafter, referred to as heating shrinkage rate) were measured. The shrinkage rate during heating was measured by the following method.

(Heating Shrinkage Rate)

An air circulation oven, for example, "MODEL PSL-2" (product name) manufactured by Tabai ESPEC Corp. was used to measure the heating shrinkage rate.

The heating shrinkage rate was calculated from a measured value obtained by placing each of the obtained containers in an air circulation oven heated to 100°C, heating the container for 150 seconds, then taking out the container from the oven, and measuring the length of each side of the container.

The heating shrinkage rate of the container is a value obtained by dividing the difference between the length before heating and the length after heating by the length before heating and multiplying the obtained value by 100, and is calculated for each of the two sides of the opening of the container.

Based on the calculated values, evaluation was performed based on the following evaluation criteria.

<<Evaluation Criteria>>

· ○: Both the two sides were "within 5%".
· △: One side was "within 5%" and the other side was in a situation of "exceeding 5%".
· ×: Both the two sides were in a situation of "exceeding 5%".

In addition, the thickness, basis weight, expansion ratio, open cell ratio, average cell diameter, degree of crystallinity, crystallization temperature, and half-crystallization time of the expanded polylactic acid resin sheets of Examples and Comparative Examples were measured.
The expansion ratio was measured by the following method. The other items were measured by the methods described above.

(Expansion Ratio)

Three measurement samples of 10 × 10 cm were cut out in the width direction (TD) from an expanded polylactic acid resin sheet, the thickness and mass of each sample were measured, and the arithmetic average value of the densities calculated from the mass and volume of each sample was taken as the apparent density of the expanded polylactic acid resin sheet.
Then, a value obtained by dividing the density (1,240 kg/m$^3$) of the polylactic acid resin by the apparent density of the expanded polylactic acid resin sheet was taken as the expansion ratio.

$$\text{Expansion ratio} = 1,240 \,/\, \text{apparent density (kg/m}^3) \text{ of expanded polylactic acid resin sheet}$$

The results are shown in Tables 2 and 3 below.

[Table 2]

| | | | Example 1 | Example 2 | Example 3 | Example 4 | Example 5 | Example 6 | Example 7 | Example 8 | Example 9 |
|---|---|---|---|---|---|---|---|---|---|---|---|
| Formulation | Type of base resin | - | Reference Production Example 1 | Reference Production Example 1 | Reference Production Example 1 | Reference Production Example 2 | Reference Production Example 1 | Reference Production Example 1 | Reference Production Example 1 | Reference Production Example 3 | Reference Production Example 4 |
| | Loading of base resin | Part by mass | 100 | 100 | 100 | 100 | 100 | 100 | 100 | 100 | 100 |
| | Type of additive | - | - | Za | Zb | Zb | Zb | Zc | Zb/Zc | - | Zb |
| | Addition amount of additive | Part by mass | - | 10 | 2 | 2 | 3 | 3 | 3/3 | - | 2 |
| | Addition amount of cell regulator | Part by mass | 1.0 | 1.0 | 1.0 | 1.0 | 1.0 | 1.0 | 1.0 | 1.0 | 1.0 |
| | Addition amount of blowing agent | Part by mass | 1.2 | 1.2 | 1.1 | 1.1 | 1.2 | 1.1 | 1.1 | 1.2 | 1.3 |
| Physical properties of expanded sheet | Thickness | mm | 1.88 | 1.94 | 1.79 | 1.89 | 1.74 | 1.72 | 1.63 | 1.82 | 1.65 |
| | Basis weight | g/m² | 362 | 355 | 373 | 346 | 366 | 376 | 385 | 335 | 395 |
| | Apparent density | kg/m³ | 193 | 183 | 208 | 183 | 210 | 219 | 236 | 184 | 239 |
| | Expansion ratio | - | 6.4 | 6.8 | 6.0 | 6.8 | 5.9 | 5.7 | 5.2 | 6.7 | 5.2 |
| | Open cell ratio | % | 9 | 12 | 14 | 16 | 22 | 18 | 23 | 24 | 27 |
| | Average cell diameter | μm | 365 | 402 | 433 | 338 | 348 | 413 | 397 | 372 | 411 |
| | Degree of crystallinity | % | 9 | 11 | 17 | 12 | 16 | 18 | 22 | 7 | 9 |
| | Crystallization temperature | °C | 98 | 83 | 86 | 95 | 85 | 94 | 84 | 100 | 88 |
| | Half-crystallization time (80°C) | min | 24.0 | 4.0 | 2.0 | 16.3 | 6.3 | 10.7 | 3.8 | 21.2 | 1.9 |
| Molding conditions | Sheet surface temperature (Primary heating process) | °C | 118 | 121 | 118 | 119 | 121 | 120 | 121 | 118 | 121 |
| | Temperature of molding die (Secondary heating process) | °C | 100 | 100 | 100 | 100 | 100 | 100 | 100 | 100 | 100 |
| Physical properties and evaluation of molded article | Degree of crystallinity | % | 28 | 31 | 29 | 31 | 32 | 30 | 40 | 22 | 28 |
| | Heating shrinkage rate | - | ○ | ○ | ○ | ○ | ○ | ○ | △ | △ | ○ |

Type of crystal nucleating agent: Za "TRIBIO S-920B", Zb "ITOWAX J-530", Zc "PEG-4000P"

[Table 3]

| | | | Comparative Example 1 | Comparative Example 2 | Comparative Example 3 | Comparative Example 4 | Comparative Example 5 |
|---|---|---|---|---|---|---|---|
| Formulation | Type of base resin | - | Reference Production Example 1 | Reference Production Example 4 | Reference Production Example 5 | Reference Example 1 | Reference Example 2 |
| | Loading of base resin | Part by mass | 100 | 100 | 100 | 100 | 100 |
| | Type of additive | - | Zb/Zc | - | - | - | - |
| | Addition amount of additive | Part by mass | 1/4 | - | - | - | - |
| | Addition amount of cell regulator | Part by mass | 1.0 | 1.0 | 1.0 | 1.0 | 1.0 |
| | Addition amount of blowing agent | Part by mass | 1.2 | 1.2 | 1.1 | 1.1 | 1.1 |
| Physical properties of expanded sheet | Thickness | mm | 2.67 | 1.35 | 1.90 | No expanded article was obtained. | No expanded article was obtained. |
| | Basis weight | g/m² | 362 | 389 | 354 | | |
| | Apparent density | kg/m³ | 136 | 376 | 385 | | |
| | Expansion ratio | - | 9.1 | 4.3 | 6.7 | | |
| | Open cell ratio | % | 20 | 35 | 18 | | |
| | Average cell diameter | μm | 423 | 396 | 321 | | |
| | Degree of crystallinity | % | 32 | 8 | 9 | | |
| | Crystallization temperature | °C | 74 | 114 | 108 | | |
| | Half-crystallization time (80°C) | min | 8.3 | No peak | No peak | | |
| Molding conditions | Sheet surface temperature (Primary heating process) | °C | 119 | 117 | 121 | | |
| | Temperature of molding die (Secondary heating process) | °C | 100 | 100 | 100 | | |
| Physical properties and evaluation of molded article | Degree of crystallinity | % | 41 | 16 | 18 | | |
| | Heating shrinkage rate | - | × | × | × | | |

Type of crystal nucleating agent: Za "TRIBIO S-920B", Zb "ITOWAX J-530", Zc "PEG-4000P"

The above results show that the present invention can provide an expanded polylactic acid resin sheet suitable for efficiently producing a molded sheet article superior in heat resistance.

DESCRIPTION OF THE REFERENCE NUMERALS

1: Expanded polylactic acid resin sheet
100: Sheet production apparatus

Claims

1. An expanded polylactic acid resin sheet comprised of a polylactic acid resin composition including a polylactic acid resin having crystallinity,
the expanded polylactic acid resin sheet having:

a degree of crystallinity of 30% or less, and
a crystallization temperature of 105°C or lower as observed by heat flux differential scanning calorimetric analysis at a heating rate of 5°C/min.

2. The expanded polylactic acid resin sheet according to claim 1, wherein said polylactic acid resin composition has a half-crystallization time at 80°C of 30 minutes or less.

**EP 4 621 003 A1**

3. The expanded polylactic acid resin sheet according to claim 1 or 2, wherein said polylactic acid resin composition includes said polylactic acid resin that is a copolymer in which a D-isomer and an L-isomer of lactic acid are copolymerized, the copolymer has a content of the D-isomer of 0.5 mol% or more and 5 mol% or less, and the copolymer has a melting point of 130°C or higher and 170°C or lower.

4. The expanded polylactic acid resin sheet according to claim 1 or 2, having an apparent density of 63 kg/m$^3$ or more and 500 kg/m$^3$ or less.

5. The expanded polylactic acid resin sheet according to claim 1 or 2, having a thickness of 0.5 mm or more and 7 mm or less.

6. The expanded polylactic acid resin sheet according to claim 1 or 2, having an open cell ratio of 50% or less.

7. The expanded polylactic acid resin sheet according to claim 1 or 2, wherein said polylactic acid resin is a modified polylactic acid resin that is a product of modification by an organic peroxide.

8. The expanded polylactic acid resin sheet according to claim 1 or 2, wherein said polylactic acid resin composition includes a crystal nucleating agent.

9. A method for producing a molded sheet article in which the molded sheet article is produced by thermoforming a resin expanded sheet,

said resin expanded sheet
being an expanded polylactic acid resin sheet comprised of a polylactic acid resin composition including a polylactic acid resin having crystallinity, and
having
a degree of crystallinity of 30% or less, and
a crystallization temperature of 105°C or lower as observed by heat flux differential scanning calorimetric analysis at a heating rate of 5°C/min,
wherein a primary heating process of heating the expanded polylactic acid resin sheet, and
a secondary heating process of sandwiching said expanded polylactic acid resin sheet subjected to the primary heating process between heated molding dies to produce a molded sheet article and to increase a degree of crystallinity of the molded sheet article
are executed.

10. The method for producing a molded sheet article according to claim 9, wherein in said primary heating process, said expanded polylactic acid resin sheet is heated such that a surface temperature reaches 60°C or higher and 130°C or lower.

11. The method for producing a molded sheet article according to claim 9 or 10, wherein in said secondary heating process, a temperature of said molding dies is adjusted to 50°C or higher and 130°C or lower.

23

Fig. 1

Fig. 2

Fig. 3

## INTERNATIONAL SEARCH REPORT

| | International application No. |
|---|---|
| | **PCT/JP2024/012549** |

**A. CLASSIFICATION OF SUBJECT MATTER**

*C08J 9/04*(2006.01)i; *B29C 44/00*(2006.01)i; *B29C 51/08*(2006.01)i
FI:  C08J9/04 101; B29C44/00 E; B29C51/08; C08J9/04 CFD

According to International Patent Classification (IPC) or to both national classification and IPC

**B. FIELDS SEARCHED**

Minimum documentation searched (classification system followed by classification symbols)

B29C44/00-44/60; B29C51/00-51/28; B29C51/42; B29C51/46; B29C67/20; C08J9/00-9/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-20444 A (SEKISUI PLASTICS CO., LTD.) 02 February 2012 (2012-02-02) claims 1-2, 4, paragraphs [0029], [0058]-[0060], table 2, examples 12-16 | 1, 3-5, 9-11 |
| Y | | 6-8 |
| X | JP 2020-158608 A (SEKISUI PLASTICS CO., LTD.) 01 October 2020 (2020-10-01) claims 1-3, paragraphs [0081], [0085]-[0086] | 1-9 |
| Y | | 6-8, 10-11 |
| Y | JP 2014-139333 A (SEKISUI PLASTICS CO., LTD.) 31 July 2014 (2014-07-31) claims, paragraphs [0026]-[0030] | 10-11 |
| A | JP 2016-128580 A (SEKISUI PLASTICS CO., LTD.) 14 July 2016 (2016-07-14) paragraph [0152] | 1-11 |
| A | JP 2016-53148 A (UNITIKA LTD.) 14 April 2016 (2016-04-14) paragraph [0079] | 1-11 |

☑ Further documents are listed in the continuation of Box C.       ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/012549**

| C. | DOCUMENTS CONSIDERED TO BE RELEVANT | |
|---|---|---|
| Category* | Citation of document, with indication, where appropriate, of the relevant passages | Relevant to claim No. |
| A | JP 2009-68021 A (JSP CORP.) 02 April 2009 (2009-04-02)<br>entire text | 1-11 |
| A | JP 2012-77150 A (SEKISUI PLASTICS CO., LTD.) 19 April 2012 (2012-04-19)<br>entire text | 1-11 |

Form PCT/ISA/210 (second sheet) (July 2022)

## INTERNATIONAL SEARCH REPORT
### Information on patent family members

International application No.

**PCT/JP2024/012549**

| Patent document cited in search report | Publication date (day/month/year) | Patent family member(s) | Publication date (day/month/year) |
|---|---|---|---|
| JP 2012-20444 A | 02 February 2012 | (Family: none) | |
| JP 2020-158608 A | 01 October 2020 | US 2022/0081554 A1 claims 1-3, paragraphs [0203], [0214]-[0223] WO 2020/194172 A1 EP 3950793 A1 CN 113366053 A KR 10-2021-0109006 A | |
| JP 2014-139333 A | 31 July 2014 | (Family: none) | |
| JP 2016-128580 A | 14 July 2016 | (Family: none) | |
| JP 2016-53148 A | 14 April 2016 | (Family: none) | |
| JP 2009-68021 A | 02 April 2009 | (Family: none) | |
| JP 2012-77150 A | 19 April 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023052796 A

- JP 5517280 B